# EUROPEAN PATENT APPLICATION

(11) **EP 1 639 905 A1**
(43) Date of publication of application: **29.03.2006**
(21) Application number: 04425707.9
(22) Date of filing: 23.09.2004
(51) Int. Cl.: A23N 1/00, C11B 1/04, C11B 1/06

(54) **Apparatus for the scutching of oily pulps, in particular vegetable oily pulps and method therefor**

(71) Applicant: Pollino, Filippo, 980 Pace Del Mela ME (IT); Miccio, Caterina, 98042 Pace Del Mela ME (IT)
(72) Inventor: Pollino, Filippo, 980 Pace Del Mela ME (IT); Miccio, Caterina, 98042 Pace Del Mela ME (IT)
(74) Representative: Papa, Elisabetta

(57) **Abstract**

An apparatus for the scutching of oily pulps, comprising a cylinder-shaped containment chamber (1) provided with bottom wall (2) and top wall (3), a rotor (10,11) rotatably mounted in said containment chamber (1) and coupled to a motor (9), and a hollow cylinder-shaped heat exchanger (7) provided with internal wall and external wall, the apparatus being characterised in that said heat exchanger (7) is arranged centrally inside said containment chamber (1) and coaxially to said rotor (10,11).

## Description

The present invention refers to an apparatus for the scutching of oily pulps and, more precisely, to an apparatus of the kind having a vertical processing chamber for the scutching of oily pulps like, e.g., olive pulp and the like.

The processing of oily pulp, like olive pulp, by means of the so-called 'scutching' thereof is already known to the art, since such a scutching operation improves and shortens the subsequent processing step, i.e. the extraction of the oily fraction from the rest of the pulp.

The principles underlying the scutching operation are essentially two, and should occur synergistically.

The first principle is mechanical, there being a mechanical action that, as the scutchers with their rotor stir the pulp, is exerted directly onto the oily particles; said action, owing to the principle of coalescence, reunites said particles in the form of ever greater droplets, thereby facilitating their extraction in horizontal centrifuge (decanter).

The second principle is of enzymatic action, triggered on the pulp during the processing of the latter inside the scutcher. It is due both to the stirring of the pulp and to the fact that the environment internal to the scutcher is temperature-controlled, and therefore the pulp into contact with the heated walls of the apparatus reaches >25°C temperatures. At such a temperature, the vacuoles still retaining the oily particles begin to enzymatically dissolve the protein fraction, releasing the fluids that, owing to the mechanical principle, will coalesce into bigger droplets.

To date, a wide variety of scutching apparatuses exists. Typically, they have a horizontally arranged containment chamber for the pulp, a rotating rotor being arranged therein in order to stir the pulp. However, suchlike apparatuses entail several operative drawbacks.

A first drawback lies in that in order to attain a good pulp treatment efficiency the apparatus should operate always filled up with pulp topping the rotor level.

Moreover, another drawback of suchlike scutchers lies in that it has to be ensured that the rotor rotates with its blades (or screw) grazing the chamber wall as much as possible, to foster the change of pulp. Of course, this entails a highly accurate construction of the apparatus, increasing the production costs as well as the control maintenance thereof.

In addition, another crucial drawback lies in that the orientation of the containment chamber, it being horizontal, exposes the entire surface of the pulp contained therein to contact with air, prejudicing the pulp owing to the oxidations occurring along this lengthy operation.

In order to overcome the above drawbacks, several alternative constructive solutions have been advanced in order to improve the abovedescribed process.

A first kind of constructive solution provides the use of lids sealed onto the containment chamber in a manner such as to put the pulp in the scutcher under nitrogen. However, such a solution entails the change of nitrogen and consequently a system for the self-production of nitrogen or another of filled cylinders. Therefore, both its production process and the maintenance thereof are highly onerous. Moreover, organoleptic tests on the yielded product highlighted a suppression of the olfactory and gustatory notes.

A second constructive solution, disclosed in Italian patent No. 1307831, provides a scutcher in which the containment chamber has a vertical arrangement, rather than a horizontal one, in a manner such as to reduce the surface into contact with the oxidising agents contained in the air.

However, such a scutcher, though exhibiting an improved operation with respect to those with a horizontal containment chamber, falls short of solving the above-highlighted problem, as the pulp, though with a reduced surface, still contacts air. Moreover, in order to abate the oxidation process as much as possible, the user should still fill up the containment chamber. This entails the drawback of still having to process vast quantities of oily pulp to create a plenum chamber, as well as of the storage thereof for the feeding of said apparatus.

Hence, object of the present invention is to solve the drawbacks highlighted hereto by providing an apparatus for the scutching of oily pulps, in which its effectiveness and efficiency be maximised, regardless from cultivars and sizes, moreover ensuring the absence of oxidising agents during the processing cycle.

Another object of the present invention is to provide an apparatus for the scutching of oily pulps allowing the processing even of low quantities of oily pulp, maintaining the same efficiency with respect to the processing of large quantities of pulp.

A further object of the present invention is to provide an apparatus for the scutching of oily pulps of simple construction, reliable, sturdy and of reasonable cost.

Hence, the present invention provides an apparatus for the scutching of oily pulps according to claim 1. Moreover, the present invention provides a scutching method according to claim XX.

Hereinafter, it will be provided a detailed description of a preferred embodiment of the apparatus for the scutching of oily pulps according to the present invention, given by way of example and without limitative purposes, making reference to the annexed drawings, wherein:
Figure 1 is a schematic longitudinal sectional view of the apparatus of the present invention;

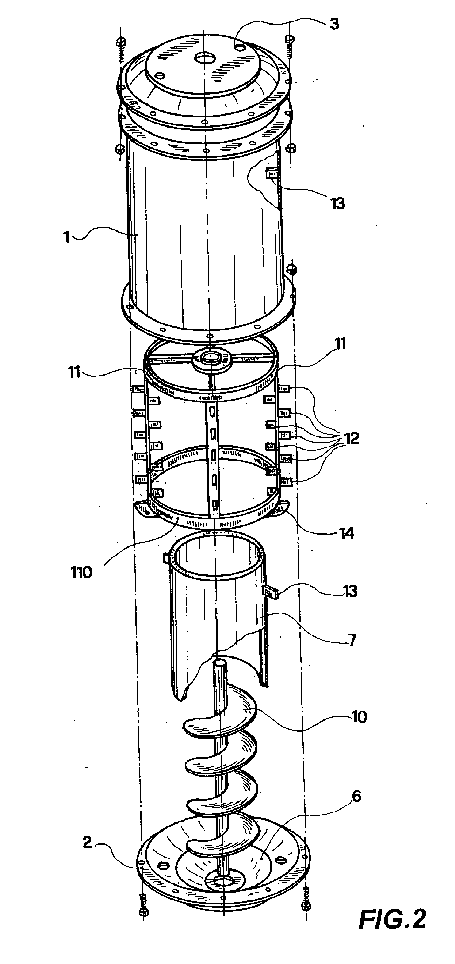

Figure 2 is an exploded view of an internal portion of the apparatus of the present invention; and
Figure 3 is a perspective view of the apparatus of the present invention.

Referring now to the Figures, therein the apparatus for the scutching of the present invention is schematically depicted.

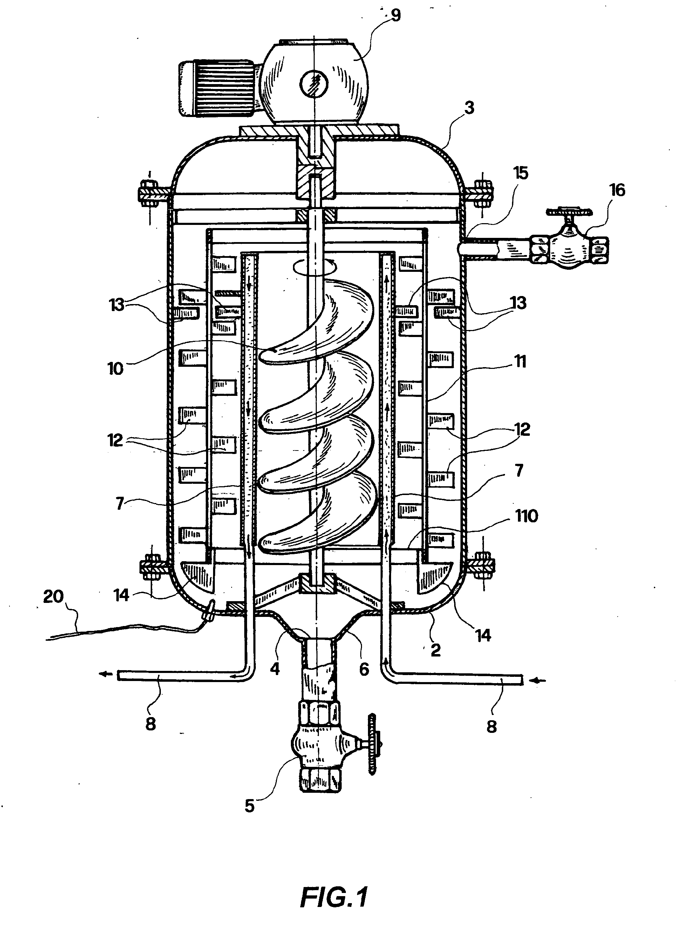

Referring in particular to Figure 1, according to the invention it is provided a containment chamber 1 for the pulp to be treated, vertically arranged and cylinder-shaped, having a hemispherical bottom 2 welded to the cylindrical wall of the chamber 1. On the other hand, the top wall of the chamber 1 has a hemispherical top cap 3 coupled to the cylindrical wall 1 by means of flanges drilled and bolted therebetween with the interposition of a rubber gasket.

At the central region of the bottom a flanged hole 4 is obtained, to house a vacuum-sealed butterfly valve 5. The valve 5 may be controlled automatically as well as manually.

At the central region of the chamber 1 and above the hole 4 there is arranged a drum 6. Above the drum 6 there is fixedly mounted a vertically developing heat exchanger 7. The exchanger 7 is hollow and it has a double wall, which is internally connected to unions 8 thereof for supplying and discharging recycled hot water.

On the other hand, the top cap 3 has a central hole provided with a flange to allow the coupling to a gearmotor 9. It ought to be specified that the flanged coupling between cap 3 and gearmotor 9 should be vacuum-sealed. The output of the gearmotor 9 is in turn coupled to a shaft supporting a rotor 10 arranged rotatably and coaxially inside the exchanger 7 (better illustrated hereinafter).

The rotor is substantially implemented with a first Archimedean screw (or auger) 10, grazing the internal wall of the exchanger 7. Moreover, integrally to the rotor axis there are mounted a pair of arms 11 connected at their bottom ends by an annular element 110. The arrangement of the arms 11 is external to the exchanger 7 and on their internal and external surfaces they have a plurality of vanes or blades 12. The dimensions of the vanes 12 are such that, during the rotation of the arms 11, they graze the surface of the exchanger 7 and the surface of the chamber 1 (better illustrated hereinafter).

Furthermore, both on the external wall of the exchanger 7 and on the internal wall of the chamber 1 there are arranged as many fixed vanes 13 (better illustrated hereinafter).

The orientation of the vanes or blades 12 and 13 is such that during the rotation of the arms 11 the former convey the pulp toward the bottom of the chamber 1.

At the bottom zone of the chamber 1 and onto the bottom edge of the annular element 110 there are mounted two or more conveying blades 14. The orientation of the blades 14 is such that during the rotation of the arms 11 the former convey the pulp toward the centre of the chamber 1 and below the exchanger 7. At the central region below the exchanger 7, the auger 10 has its spiral oriented in such a manner as to convey the pulp upward during its rotation.

According to the arrangement of the auger 10 and of the blades or vanes 12 and 13 and blades 14 thereof, during their rotation a pulp circulation is generated, said pulp tending to ascend centrally and internally to the exchanger 7, to then descend downward externally to the external wall of the exchanger 7 and onto the wall of the chamber 1 (highlighted by arrows in Figure 1). This arrangement enables to cyclically circulate the pulp inside the chamber 1 and into contact with the heat exchanger 7, in a manner such as to foster the thermal exchange about the latter, in turn fostering the generation of convection currents. Moreover, such a processing step takes place under hard vacuum conditions.

The auger 10 inside the exchanger 7, by rotating, provides the continual ascensional circulation of the pulp; thus, the fostering of the thermal exchange throughout all of the pulp is accelerated. This solution represents an improvement with respect to the apparatuses of the state of the art, in which the heat exchanger is provided onto the external wall of the apparatus. In fact, given the high distance of the wall from the centre of the apparatus, no homogeneous temperatures are obtained. In addition, the pulp needs not contact the walls for too long, risking to overheat it.

Furthermore, the arrangement of the exchanger 7 inside the containment chamber 1 according to the present invention constitutes a remarkable improvement with respect to the known apparatuses, because the latter have as much exchange surface toward the pulp as toward the outside. This entails a low efficiency and a high calorie expenditure, whereas in the apparatus of the present invention all of the heat is transferred to the pulp.

In addition, the exchanger 7 is contrived for the direct and pressurised exchange, requires no bleeding and has an electronically adjusted ON/OFF operation. This yields utmost efficiency and minimal energy expenditure.

On the other hand, at the top portion of the cylindrical wall of the chamber 1, it is provided a supplying port 15 of the apparatus for the scutching. The port 15 is coupled to an union and to a vacuum-sealed butterfly valve 16. It has to be pointed out that the arrangement of the port 15 is such that the same also acts as overflow indicator, as the feeding of the pulp toward the inside of the chamber 1 instantly stops when the port 15 is obstructed by the pulp.

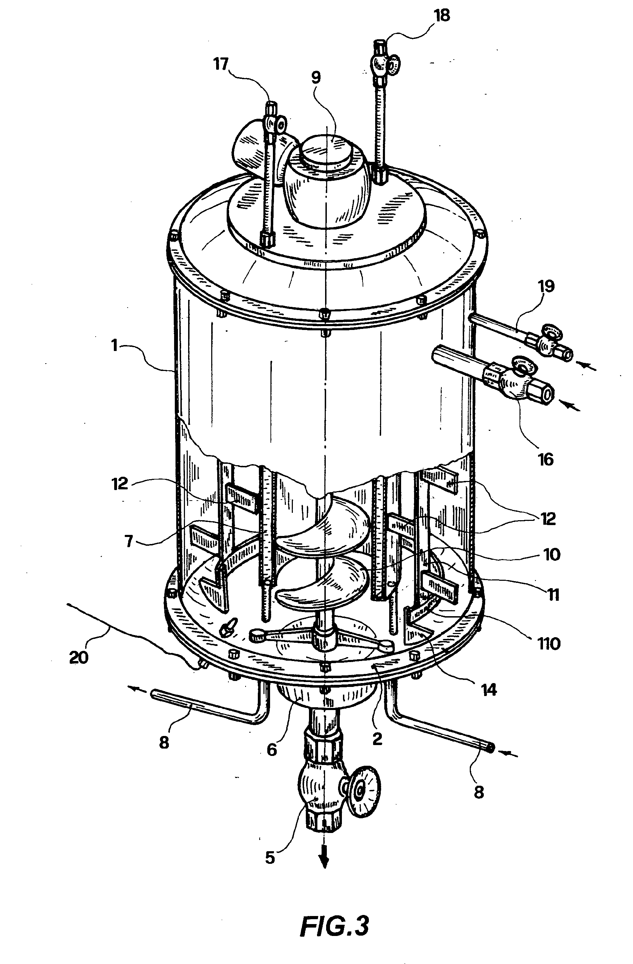

Furthermore, and as it is apparent in Figure 3, the apparatus entails the following additional operation services.

Above the cap 3 there are arranged a line 17 for supplying blown air and a line 18 for extracting air, connected to a vacuum pump to make the vacuum required for the pulp processing step and for the subsequent emptying of the chamber 1. In addition, it is provided a line 19 for supplying sanitary water for the subsequent rinsing of the chamber 1. Furthermore, at the bottom section of the chamber 1 it is provided a probe 20 for detecting the temperature of the pulp during the processing step thereof.

According to this arrangement, both the inletting and the discharging of the pulp takes place without the aid of any pump whatsoever. In fact, for inletting the pulp it is provided the use of the vacuum made in the scutcher, whereas for discharging the former it is provided the inletting of pressurised clean air from a dry blower. This enables to adjust the pulp flow rate (litres/hour) toward the decanter depending on the pressure used. Moreover, an additional advantage lies in preventing the re-emulsifying effect commonly exhibited by pumps, due to their high speed of rotation.

Moreover, the pressurised water line 19 allows to inlet water in the scutcher for a final rinsing, or for a total emptying in case of use for individual batches.

Furthermore, at the inlet and outlet for the pulp of the scutcher of the present invention it is provided the application of a permanent-charge magnet having a 12000 Gauss charge at a section of the supplying pipe and of the discharge pipe, respectively. In fact, the magnet applied at the inlet will lower the surface tension of the water, thereby further fostering the migration of the oily particles, whereas at the discharge the former, besides from continuing its action with regard to the water, will act as antibacterial agent, deactivating fungal activities by exploding the spores. As a consequence, the process wastewaters will be less polluting and the extracted oil will be of higher quality, as the use of the magnets in no way prejudices oil features.

The apparatus for the scutching of the present invention entails several advantages.

A first advantage lies in that the degree and the time of vacuum can be adjustable. Hence, it is possible to select the quantities of aromatic substances to be extracted, thereby customizing the olfactory and gustatory notes; in addition, the maximum extraction of phenolic substances will be ensured at all times.

A second advantage lies in that it is entirely made of stainless steel and hence, not being potentially polluting with metal oxides, it preserves the mechanical effect, accordingly fostering coalescence even in case of a partially filled scutcher. Moreover, an ensuing advantage lies in that owing to the absence of oxygen no mould nor bacteria will ever nestle inside the scutcher, and the pulp will exhibit a markedly reduced rate of peroxides.

A third advantage lies in that, given the specific arrangement of the auger 10 and of the arms 11 between the exchanger 7, a uniform thermal exchange is ensured even in case of a partially filled containment chamber 1.

Another advantage lies in that the processing under hard vacuum ensures the absence of oxygen and therefore the absence of chemically oxidising actions. This entails that the pulp may stay inside the apparatus even for very long times, it being unaffected thereby.

A further advantage lies in that vacuum enhances the extraction effect. The physical principle causes the most resilient vacuoles to implode due to vacuum, thereby releasing the fluids. Moreover, given the presence of emulsions, i.e., the two fluids linked therebetween by air particles, and given the difference in the evaporation temperature of the two fluids, vacuum fosters the dissociation of air from the emulsion and the evaporation of the water.

Another advantage lies in that the process entails an elevated efficiency, given the more effective mechanical effect and the time surely much lower than that of a traditional scutcher.

A further advantage lies in that the apparatus of the present invention so contrived, besides from being a real conversion to top-quality extraction even from pitted olives, which to date are difficult to scutch due to the lack of pit, provides maximum versatility also in extractive capacity. In fact, even with operators' mistakes at assessing the pulp size, or with different cultivars, by lengthening the stay time of the pulp in the apparatus the desired result in terms of extractive capacity will equally be attained, yet in no way prejudicing the product as all will take place under conditions allowing no oily pulp oxidation whatsoever.

Hence, the apparatus enables processing providing top-quality extra virgin oils, in conjunction with olive pitting systems already *per se* yielding high-quality oils, yet exhibiting a scutching problem.

A further advantage lies in that the implementation costs thereof are equal to or lower than those of a traditional scutcher, the scutching times are greatly reduced, and the preparation of the pulp for the next step is much more effective.

## Claims

1. An apparatus for the scutching of oily pulps, comprising a cylinder-shaped containment chamber (1) provided with a bottom wall (2) and a top wall (3), a rotor (10,11) rotatably mounted within said containment chamber (1) and coupled to a motor (9), and a hollow cylinder-shaped heat exchanger (7) provided with an internal wall and an external wall,
**characterised in that** said heat exchanger (7) is arranged inside said containment chamber (1) and coaxially to said rotor (10,11).

2. The apparatus for the scutching of oily pulps according to the preceding claim, wherein said rotor comprises an auger (10) coaxially coupled to at least one pair of fixed arms (11), the arrangement being such that during the rotation of said rotor said auger (10) cooperates with the internal wall of said heat exchanger (7), and said pair of fixed arms (11) is apt to cooperate both with the external wall of said heat exchanger (7) as well as with the internal wall of said containment chamber (1).

3. The apparatus for the scutching of oily pulps according to claim 1 or 2, wherein the internal wall and the external wall of said heat exchanger (7) are spaced therebetween, providing an hydraulic circulation therebetween.

4. The apparatus for the scutching of oily pulps according to claim 1 or 2 or 3, wherein said at least one pair of arms (11) comprises a plurality of blades or vanes (12) arranged internally and externally with respect to the radial direction of said pair of arms (11).

5. The apparatus for the scutching of oily pulps according to any one of the preceding claims, wherein said containment chamber (1) comprises a plurality of blades or vanes (13) mounted onto the internal wall thereof for cooperating with said plurality of blades or vanes (12) of said at least one pair of arms (11) of said rotor during the rotation thereof.

6. The apparatus for the scutching of oily pulps according to any one of the preceding claims, further comprising a plurality of conveying blades (14) mounted integrally to said rotor (10,11) at the bottom edge region (110) of said pair of arms (11), the arrangement being such that during the rotation of said rotor (10,11) said plurality of blades (14) cooperate with said bottom wall (2) of said containment chamber (1).

7. The apparatus for the scutching of oily pulps according to any one of the preceding claims, further comprising a supplying port (15) for pulp to be treated, arranged above said containment chamber (1), and a discharge port (4) arranged below said containment chamber (1) .

8. The apparatus for the scutching of oily pulps according to any one of the preceding claims, further comprising a first line (17) for inputting air inside said containment chamber (1) and a second line (18) for extracting air from said containment chamber (1).

9. The apparatus for the scutching of oily pulps according to any one of the preceding claims, further comprising a water inlet line (19) for supplying water inside said containment chamber (1).

10. The apparatus for the scutching of oily pulps according to any one of the preceding claims, further comprising a probe (20) for detecting the inner temperature to the containment chamber (1).

11. The apparatus for the scutching of oily pulps according to any one of the preceding claims, further comprising a first permanent-charge magnet mounted at the supplying port (15).

12. Apparatus for the scutching of oily pulps according to any one of the preceding claims, further comprising a second permanent-charge magnet mounted at the discharge port (4).

13. The apparatus for the scutching of oily pulps according to claim 11 or 12, wherein said first or second magnet has a permanent charge of 12000 Gauss aprox.

14. The apparatus for the scutching of oily pulps according to any one of the preceding claims, wherein said containment chamber (1) is under high vacuum during the entire step of processing the oily pulp.

15. A method for the scutching of oily pulps, comprising a step of introducing the pulp to be treated from a supplying port (15) inside and above a containment chamber (1), a step of mechanical processing of the pulp in which it is provided work applied to the pulp by mechanical means (10,11) provided with moving means (12) and concomitantly the transmission of heat to the pulp via conduction and thermal convection by heat exchange means (7), and a subsequent step of discharging the treated pulp via a discharge port (4) arranged below said containment chamber (1),
the method being **characterised in that** it further comprises the step of making high vacuum inside the containment chamber (1) prior to the introduction of the pulp to be treated; and the step of generating overpressure inside said containment chamber (1) prior to the step of discharging the treated pulp from said containment chamber (1).

16. The method for the scutching of oily pulps according to the preceding claim, further **characterised in that** during said step of applying work to the pulp inside said containment chamber (1) it is provided a steady loop circulation of said pulp in a first ascensional direction, starting from the bottom central region of said chamber (1) to the top central region of said containment chamber (1) to a second descensional direction starting from the top peripheral region of said containment chamber (1) parallel to the wall of said chamber(1) to the bottom peripheral region thereof.

17. A method for the scutching of oily pulps according to claim 15 or 16, further **characterised in that** said step of introducing the pulp to be treated inside said containment chamber (1) is obtained by pressure difference between a supply port (15) and the containment chamber (1), and **in that** said step of discharging the treated pulp from said containment chamber (1) is obtained by pressure difference between said containment chamber (1) and said discharge port (4).
